# EUROPEAN PATENT SPECIFICATION

(11) **EP 0 315 111 B1**
(45) Date of publication and mention of the grant of the patent: **04.01.1995**
(21) Application number: 88118156.4
(22) Date of filing: 31.10.1988
(51) Int. Cl.: G06F 11/14, G07G 1/00

(54) **Data processing device**
Datenverarbeitungsvorrichtung
Dispositif de traitement de données

(30) Priority: 31.10.1987 JP 276283/87
(43) Date of publication of application: 10.05.1989
(73) Proprietor: SHARP KABUSHIKI KAISHA, Osaka 545 (JP)
(72) Inventor: Nishii, Toshifumi, Yamatokooriyama-shi Nara-ken (JP); Oka, Yukihiko, Yamatokooriyama-shi Nara-ken (JP); Shirasaki, Takashi, Nara-shi Nara-ken (JP); Miyamoto, Kunihiro, Tenri-shi Nara-ken (JP)
(74) Representative: Selting, Günther, Dipl.-Ing.

(56) References cited:
- EP-A- 0 100 140
- PATENT ABSTRACTS OF JAPAN, vol. 3, no. 124 (E-144), 17th October 1979;& JP-A-54 105 944 (TOKYO DENKI K.K.) 20-08-1979
- PATENT ABSTRACTS OF JAPAN, vol. 8, no. 65 (P-263)[1502], 27th March 1984;& JP-A-58 213 350 (FUJITSU K.K.) 12-12-1983

## Description

The present invention relates to a data processing device preferably adopted to such as an electronic cash register for processing data sent from a host computer and data entered by operating keys thereof employed in a sales management system, wherein the electronic cash register is provided in each of branch stores and the host computer is provided in a head office which is connected to each of the branch stores through one or more on-line circuits.

### DESCRIPTION OF THE PRIOR ART

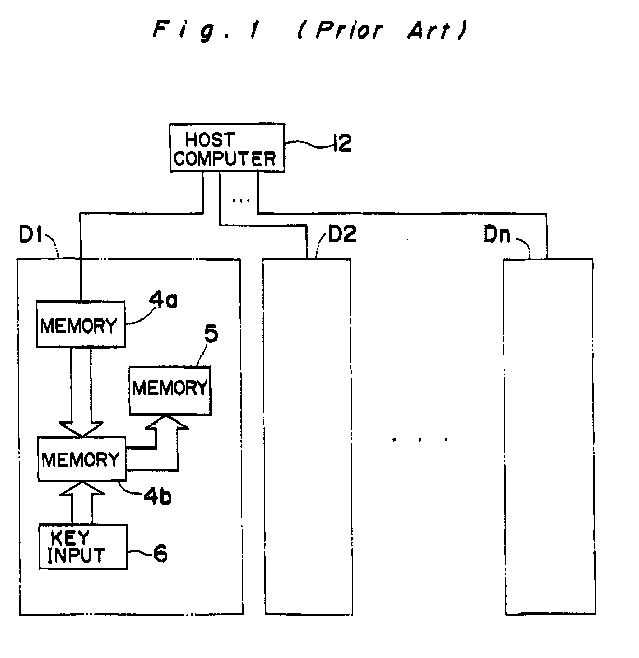

Fig. 1 shows a block diagram showing a constitution of a sales management system comprising electrcnic cash registers D1 to Dn (represented as D hereinafter) according to the prior art, wherein the electronic cash registers D2 to Dn also have the same structures as that of the electronic cash register D1.

Each of the electronic cash registers D comprises three memory means 4a, 4b and 5 for example and a key input portion 6. Such an electronic cash register D with a structure as mentioned above is provided in each of branch stores and is connected to a host computer 12 provided in a head or central processing office through one or more on-line circuits. In such a sales management system, all of the data such as sales data of the branch stores are sent from the electronic cash registers D to the host computer 12 through a communication line and the sent data are integrally processed for cash receipt/disbursement and stock management in the host computer 1.

When data of goods such as a unit price and a division code ("division˝ means a minimum sorting area consisting of goods in the same category having the same price assigned) of each of goods are sent from the host computer 12 to the electronic cash register D provided in each of the branches, the data of the goods are first entered in the memory portion 4a of a buffer in order that the unit price of the goods e.g. should not be updated during the process in the electronic cash register D, i.e., during the registering operation. Moreover, data of goods can be written in the memory 4b by operating the key input portion 6 in order that the unit price of the goods e.g. can be decided in each of the branches individually.

The data of goods to be entered in the memories 4a and 4b have priorities respectively defined and, for example, in case two different unit prices for the same goods are respectively stored in the memories 4a and 4b, the data stored in the memory 4a is transferred to the memory 4b in order to store the data with a higher priority in the memory 4b, so that both of the two kinds data are combined. When the transfer of the data from the memory 4a to the memory 4b is completed, the memory content of the memory 4a is deleted.

Subsequently, the combined data of goods stored in the memory 4b are transferred to the memory 5, whereby the data of goods such as a unit price and a division code of the goods are set in the electronic cash register D so that the processes according to the set data are performed.

In the electronic cash register D as described above in the prior art, when a data is transferred from the memory 4b to the memory 5 for example, there may occur an error due to e.g. a lack of the capacity of the memory 5. In such a case, the data stored in the memory 4a have been already deleted and it can not be judged whether also the data stored in the memory 4b are the data written in the memory 4b by operating the key input portion 6 or the data transmitted from the host computer 12. Therefore, if there occurs such an error, a part of the data is lost, resulting in that a large hindrance is caused in the sales management system.

EP-A-0 100 140 discloses a data processing system having an instruction processor connected with a main memory and a control store and a micro-sequencer for feeding instructions to the processor, an auxiliary store for feeding instruction sets to the processor's control store, and several input/output devices for cooperation with the main memory. An instruction set stored in the auxiliary store is transferred to the control store in start-up. The instruction set is used to execute an initialization program which identifies an input/output device in which a micro-code local program and a desired micro-code file are stored. No micro-code load program is transferred to the processor's main memory and the instruction set is then transferred in selected blocks from the input/output device to the main memory and then to the control store. This data processing system is able to access more than one set of micro-instructions from more than one input/output device without the need or separate controllers associated with each input/output device.

It is an object of the present invention to provide a sales management system and a method of hierarchal data transfer in a sales management system, wherein the data stored in one of the second memories do not go lost when, e.g., the capacity of the first memory is exhausted.

The sales management system of the present invention is defined by claim 1, and the method of hierarchal data transfer in a sales management system of the present invention is defined by claim 2.

According to the present invention, when transferring data to the first memory means from a plurality of second memory means having transfer orders predetermined each other, the data can be maintained in each of the second memory means till the transfer of all the data stored in the second memory means is completed. Therefore, even in case the data stored in the second memory means can not be correctly transferred to the first memory means due to the occurrence of an error, the data maintained in the second memory means can be seen.

### BRIEF DESCRIPTION OF THE DRAWINGS

Fig. 1 is a block diagram showing a constitution of an electronic cash register D in the prior art,
Fig. 2 is a block diagram showing an embodiment of an electronic cash register C according to the present invention, and
Fig. 3 is a flow chart for explaining an operation of the electronic cash register C.

### DETAILED DESCRIPTION OF THE PREFERRED EMBODIMENT

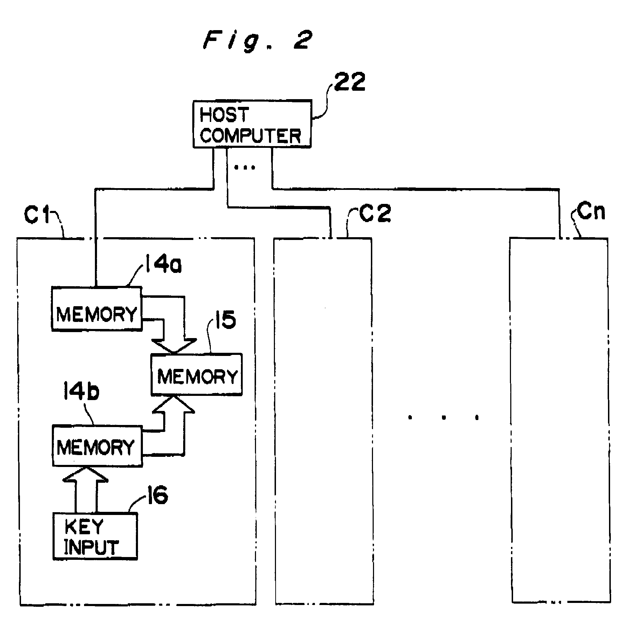

In Fig. 2, the constitutions of electronic cash registers Cl to Cn (represented as C hereinafter) are made similar.

Each of the electronic cash registers C comprises first memory means 15, second memory means 14a and 14b and a key input portion 16.

The electronic cash register C provided in each of branch stores is connected to a host computer 22 which is provided in a head or central processing office through one or more on-line circuits. In such a sales management system, various data such as a data of sales in each of the branch stores are sent from the electronic cash register C to the host computer 22 so as to be integrally processed for cash receipt/disbursement and stock management.

For example, when data such as a unit price and a division code of goods are sent from the host computer 22 to the electronic cash register C in each of the branches, the data of the goods are first entered in the memory 14a which is a buffer in order that the data such as a unit price of the goods should not be updated during the process in the electronic cash register C. Moreover, data of the goods can be also written in the memory 14b by operating the key input portion 16 in order to determine the unit price of the goods in each of the branch stores individually.

As to the memory means 14a and 14b in which the data of goods are stored, the priority of the data transfer is predetermined by operating the key input portion 16.

The data of goods stored in the memory means 14a and 14b are transferred to the memory 15 according to the lower priority thereof by operating keys for transferring data in the key input portion 16 and when the transfer of the data both in the memory means 14a and 14b is completed, the memory contents of both of the memory means 14a and 14b are deleted.

Subsequently, the processes according to the data of goods stored in the memory 15 are performed in the electronic cash register C.

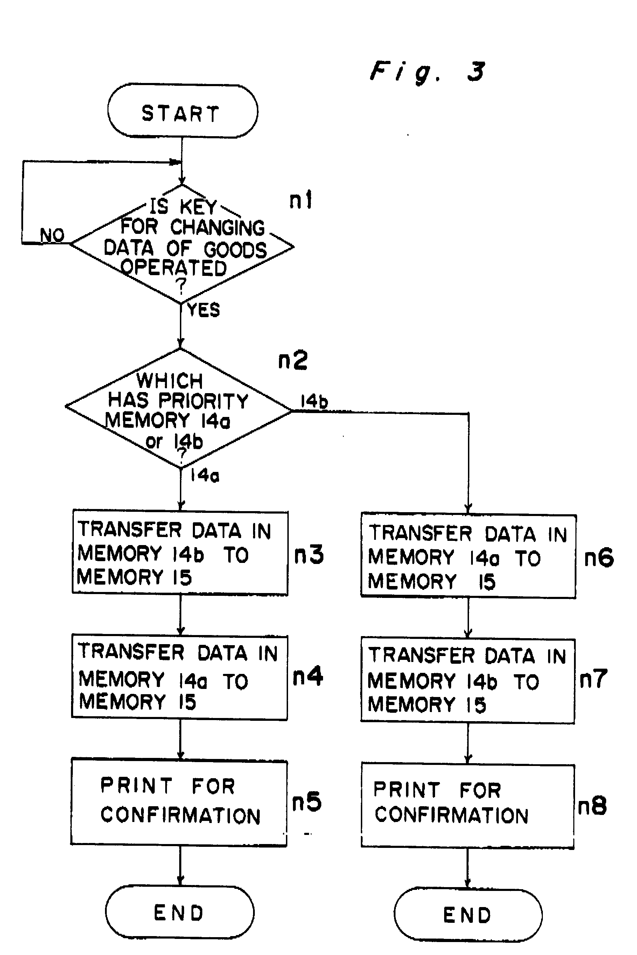

Next, the operation of the electronic cash register C will be explained hereinafter with reference to the flow chart as shown in Fig. 3. In the case that the data of goods sent from the host computer 22 are stored in the memory 14a and that the data of goods are written in the memory 14b by operating keys in the key input portion 16, it is judged in step n1 whether or not the operation for changing the mode into a mode for updating the data of goods stored in the electronic cash register C is performed by operating the keys in the key input portion 16, and in case of performing the operation for changing the mode, the program goes to step n2.

It is judged in step n2 which is higher the priority of the data stored in the memory 14a or the priority of the data stored in the memory 14b. In case of giving the priority to the data stored in the memory 14a, the program goes to step n3 and the data stored in the memory 14b are transferred to the memory 15.

Next in step n4, the data stored in the memory 14a are transferred to the memory 15 and when the transfer of the data is completed, the data stored in both of the memory means 14a and 14b are deleted.

Accordingly, in case two different unit prices of the same goods are respectively stored in the memory means 14a and 14b, though the data of the unit price stored in the memory 14b are first transferred to the memory 15, since the data of the unit price of the goods stored in the memory 14a are duplicatedly written in the memory 15, the data stored in the memory 14a are stored with priority in the memory 15.

In this way, when the change of the data of goods stored in the memory 15 is completed in the electronic cash register C, the data of goods are printed for confirmation in step n5.

In case of giving priority to the data stored in the memory 14b in step n2, the program goes to step n6 and the data stored in the memory 14a are first transferred to the memory 15.

Next in step n7, the data stored in the memory 14b are transferred to the memory 15 on the contrary as mentioned above. Therefore, the data stored in the memory 14b are stored in the memory 15 with priority.

As described above, when the change of the data of goods stored in the memory 15 is completed, the data stored in both of the memory means 14a and 14b are deleted and next in step n8 the data of goods are printed for confirmation.

In the electronic cash register C as described above, for example, in case that there occurs an error due to the lack of the capacity of the memory 15 e.g. in the process of transferring the data from the memory 14a to the memory 15 so that the data can not be correctly transferred to the memory 15, the data stored in the memory means 14a and 14b are not deleted to be maintained. Therefore, the contents of the data stored in the memory means 14a and 14b can be seen and if necessary, the contents of the data stored in the memory 14b can be re-written and the re-written data can be once more transferred to the memory 15.

In this embodiment, though the second memory means consist of two memory portions 14a and 14b, the second memory means may be composed of more than three memory portions.

As described above, according to the present invention, in the case that the data is transferred to the first memory means from a plurality of second memory means of which the orders of the transfer of the data are predetermined each other, when the transfer of the data is not correctly performed due to the occurrence of an error, the data stored in each of the second memory means are not deleted so as to be maintained. Accordingly, in such a case, the cause of the error e.g. can be caught with reference to the data stored in each of the second memory means, whereby the operability can be improved.

## Claims

1. A sales management system comprising:
a host computer (22) for setting temporary data, key input means (16) for setting temporary data, and
a plurality of electronic cash registers (C1-Cn), operatively communicated with said host computer (22) and said key input means (16), each of said electronic cash registers including:
first memory means (15) for storing prioritized data,
characterised in that each of said electronic cash registers further includes:
a plurality of second memory means (14a,14b), operatively communicative with said first memory means (15), for receiving the temporary data from said host computer and said key input means and temporarily storing the temporary data to be transferred to said first memory means (15), and each of said plurality of second memory means being designated with a unique order of priority by which said temporary data is to be transferred to said first memory means as the prioritized data, and
control means, operatively communicative with each of said plurality of second memory means (14a,14b), for controlling the transfer of said temporary data from said plurality of second memory means to said first memory means (15) from lowest to highest priority as designated by said unique order of priority for each of said plurality of second memory means, and for deleting said temporary data stored in each of said plurality of second memory means when the entirety of said temporary data stored in the highest priority second memory means has been transferred to said first memory means (15).

2. A method of hierarchal data transfer in a sales management system, including a plurality of electronic cash registers (C1-Cn), comprising the steps of:
setting temporary data by a host computer (22) and key input means (16) which are operatively communicative with said plurality of electronic cash registers,
temporarily storing the temporary data, which have been transferred from said host computer and said key input means, in at least one of a plurality of secondary memory means (14a,14b) of one of said electronic cash registers,
characterised in that it further comprises the steps of:
designating a unique priority for each of said plurality of secondary memory means (14a,14b) from a lowest to a highest priority,
sequentially transferring the entirety of said temporary data from each of said plurality of secondary memory means (14a,14b), in an order from said lowest to highest priority as designated by said unique priority for each of said plurality of secondary memory means, to primary memory means of said electronic cash register, and
deleting said temporary data from said plurality of secondary memory means (14a,14b) when the step of sequentially transferring the entirety of said temporary data from said secondary memory means having the highest priority to said primary memory means (15) of said electronic cash register has been completed.

3. A method as claimed in claim 2, further comprising the step of:
maintaining said temporary data in said plurality of secondary memory means (14a,14b) when said temporary data from at least one of said secondary memory means fails to be transferred to said primary memory means of said electronic cash register.

## Patentansprüche

1. Verkaufsmanagementsystem mit
- einem Host-Computer (22) zum Erstellen temporärer Daten,
- einer Tasteneingabeeinrichtung (16) zum Erstellen temporärer Daten,
- mehreren elektronischen Registrierkassen (C1-Cn), die betriebsmäßig mit dem Host-Computer (22) und der Tasteneingabeeinrichtung (16) verbunden sind, wobei jede der elektronischen Registrierkassen aufweist:
- eine erste Speichereinrichtung (15) zum Speichern von mit Priorität versehenen Daten,
dadurch gekennzeichnet, daß jede der elektronischen Registrierkassen ferner aufweist:
- mehrere betriebsmäßig mit der ersten Speichereinrichtung (15) verbundene zweite Speichereinrichtungen (14a, 14b) zum Empfangen der temporären Daten vom Host-Computer und der Tasteneingabeeinrichtung und zum temporären Speichern der zur ersten Speichereinrichtung (15) zu übertragenden Daten, wobei jede der mehreren zweiten Speichereinrichtungen nach einer kennzeichnenden Prioritätszahl bezeichnet ist, mit der die temporären Daten als die mit einer Priorität versehenen Daten zur ersten Speichereinrichtung übertragen werden, und
- eine betriebsmäßig mit jeder der mehreren zweiten Speichereinrichtungen (14a, 14b) verbundenen Steuereinrichtung, welche die Übertragung der temporären Daten von den mehreren zweiten Speichereinrichtungen zur ersten Speichereinrichtung (15) von der niedrigsten zur höchsten Priorität entsprechend der Bestimmung durch die kennzeichnende Prioritätszahl jeder der mehreren zweiten Speichereinrichtungen steuert und welche die in jeder der mehreren zweiten Speichereinrichtungen enthaltenen temporären Daten löscht, wenn die Gesamtheit der in der zweiten Speichereinrichtung mit der höchsten Priorität enthaltenen temporären Daten an die erste Speichereinrichtung (15) übertragen ist.

2. Verfahren zur hierarchischen Datenübertragung in einem Verkaufsmanagementsystem mit mehreren elektronischen Registrierkassen (C1-Cn), mit den folgenden Schritten:
- Erstellen temporärer Daten mittels eines Host-Computers (22) und einer Tasteneingabeeinrichtung (16), die betriebsmäßig mit den mehreren elektronischen Registrierkassen verbunden sind,
- temporäres Speichern der von dem Host-Computer und der Tasteneingabeeinrichtung her übertragenen temporären Daten in wenigstens einer von mehreren Sekundär-Speichereinrichtungen (14a, 14b) einer der elektronischen Registrierkassen,
dadurch gekennzeichnet, daß es ferner die folgenden Schritte aufweist:
- Bestimmen einer kennzeichnenden Priorität für jede der mehreren Sekundär-Speichereinrichtungen (14a, 14b) von der niedrigsten bis zur höchsten Priorität,
- sequentielles Übertragen der gesamten temporären Daten von jeder der mehreren Sekundär-Speichereinrichtungen (14a, 14b) an die Primär-Speichereinrichtung der elektronischen Registrierkasse entsprechend der für jede der mehreren Sekundär-Speichereinrichtungen bestimmten kennzeichnenden Priorität in der Reihenfolge von der niedrigsten zur höchsten Priorität, und Löschen der temporären Daten aus den mehreren Sekundär-Speichereinrichtungen (14a, 14b), wenn der Schritt des sequentiellen Übertragens sämtlicher temporärer Daten von der Sekundär-Speichereinrichtung mit der höchsten Priorität an die Primär-Speichereinrichtung (15) der elektronischen Registrierkasse abgeschlossen ist.

3. Verfahren nach Anspruch 2, ferner mit dem Schritt des Haltens der temporären Daten in den mehreren Sekundär-Speichereinrichtungen (14a, 14b), wenn die Übertragung der temporären Daten wenigstens einer der Sekundär-Speichereinrichtungen an die Primär-Speichereinrichtung der elektronischen Registrierkasse nicht erfolgt ist.

## Revendications

1. Système de gestion des ventes comprenant :
un ordinateur central (22) servant à établir des données temporaires,
un moyen d'entrée à touches (16) servant à établir des données temporaires, et
une pluralité de caisses enregistreuses électroniques (C1 à Cn), reliées fonctionnellement audit ordinateur central (22) et audit moyen d'entrée à touches (16), chacune desdites caisses enregistreuses électroniques comprenant :
un premier moyen de mémorisation (15) servant à stocker des données prioritaires,
caractérisé en ce que chacune desdites caisses enregistreuses électroniques comprend en outre :
une pluralité de deuxièmes moyens de mémorisation (14a, 14b), reliés fonctionnellement audit premier moyen de mémorisation (15), afin de recevoir les données temporaires depuis ledit ordinateur central et ledit moyen d'entrée à touches et à stocker temporairement les données temporaires à transférer audit premier moyen de mémorisation (15), et chaque moyen dans ladite pluralité de deuxièmes moyens de mémorisation étant désigné par un ordre unique de priorité par lequel lesdites données temporaires doivent être transférées audit premier moyen de mémorisation, comme données prioritaires, et
un moyen de commande relié fonctionnellement avec chaque moyen de ladite pluralité de deuxièmes moyens de mémorisation (14a, 14b), afin de commander le transfert desdites données temporaires depuis ladite pluralité de deuxièmes moyens de mémorisation audit premier moyen de mémorisation (15), de la priorité la plus basse à celle la plus haute, désignée par l'ordre unique de priorité pour chaque moyen de ladite pluralité de deuxièmes moyens de mémorisation, et afin d'effacer lesdites données temporaires stockées dans chaque moyen de ladite pluralité de deuxièmes moyens de mémorisation, lorsque la totalité desdites données temporaires stockées dans le deuxième moyen de mémorisation à priorité la plus haute a été transférée audit premier moyen de mémorisation (15).

2. Procédé de transfert hiérarchique de données dans un système de gestion des ventes, comprenant une pluralité de caisses enregistreuses électroniques (Cl à Cn), comprenant les étapes suivantes :
l'établissement de données temporaires par un ordinateur central (22) et un moyen d'entrée à touches (16), relié fonctionnellement à ladite pluralité de caisses enregistreuses électroniques,
le stockage temporaire des données temporaires, qui ont été transférées par ledit ordinateur central et ledit moyen d'entrée à touches, dans au moins un moyen parmi une pluralité de moyens secondaires de mémorisation (14a, 14b) de l'une desdites caisses enregistreuses électroniques,
caractérisé en ce qu'il comprend en outre les étapes suivantes :
la désignation d'une priorité unique pour chaque moyen de ladite pluralité de moyens secondaires de mémorisation (14a, 14b), de la priorité la plus basse à celle la plus haute,
le transfert séquentiel de la totalité desdites données temporaires à partir de chaque moyen de ladite pluralité de moyens secondaires de mémorisation (14a, 14b), dans un ordre allant de la priorité la plus basse à la plus haute, désignée par ladite priorité unique pour chaque moyen de ladite pluralité de moyens secondaires de mémorisat ion, vers des moyens primaires de ladite caisse enregistreuse électronique, et
l'effacement desdites données temporaires depuis ladite pluralité de moyens secondaires de mémorisation (14a, 14b) lorsque l'étape de transfert séquentiel de la totalité desdites données temporaires, depuis lesdits moyens secondaires de mémorisation ayant la priorité la plus haute audit moyen primaire de mémorisation (15) de ladite caisse enregistreuse électronique, a été achevée.

3. Procédé selon la revendication 2, comprenant en outre l'étape de :
maintien desdites données temporaires dans ladite pluralité de moyens secondaires de temporisation (14a, 14b), lorsque lesdites données temporaires provenant d'au moins l'un desdits moyens secondaires de mémorisation n'ont pas été transférées audit moyen primaire de mémorisation de ladite caisse enregistreuse électronique.
